Europäisches Patentamt

European Patent Office

Office européen des brevets

(11) Publication number: **0 181 198 B1**

# EUROPEAN PATENT SPECIFICATION

(45) Date of publication of patent specification: **15.04.92** (51) Int. Cl.5: **C09D 11/00**

(21) Application number: **85308049.7**

(22) Date of filing: **05.11.85**

(54) Hot melt impulse ink jet ink.

(30) Priority: **05.11.84 US 668095**

(43) Date of publication of application:
**14.05.86 Bulletin 86/20**

(45) Publication of the grant of the patent:
**15.04.92 Bulletin 92/16**

(84) Designated Contracting States:
**AT CH DE FR GB IT LI NL**

(56) References cited:
**EP-A- 0 099 682**
**DE-A- 2 046 491**
**FR-A- 2 183 873**
**US-A- 4 443 820**

(73) Proprietor: **DATAPRODUCTS CORPORATION**
**6200 Canoga Avenue**
**Woodland Hills California 91365(US)**

(72) Inventor: **Cooke, Theodore Michael**
**25 Washington Avenue**
**Danbury Connecticut 06810(US)**
Inventor: **Lin, An-Chung Robert**
**1 Patricia Lane**
**New Town Connecticut 06470(US)**

(74) Representative: **Stanley, David William et al**
**APPLEYARD LEES & CO. 15 Clare Road Halifax**
**West Yorkshire HX1 2HY(GB)**

EP 0 181 198 B1

## Description

The present invention relates to the field of hot melt ink jet inks for use with impulse ink jet (drop on demad) type printers. More particularly, the present application relates to such ink jet inks which utilize solid pigments rather than soluble dyes as their colorants.

Originally, printing with hot melt type ink was suggested in connection with electrostatic printing apparatuses. In U.S. Patent No. 3,653,932 (Berry et al) , entitled "Electrostatic Printing Composition Comprising Didodecyl Sebacate", an electrostatic printing process is disclosed using an ink comprised of one or more specified di-esters. In the Berry process, ink is heated into a fluid phase and is caused to form a convex meniscus at the nozzle tip by hydrostatic pressure. This pressure causes the end of the ink to intrude into an electrostatic field. Ink is then electrostatically drawn into a single field stream of droplets which traverses the span between the tip of the nozzle and the carrier. The preferred inks for use in this process are di-esters of sebacic acid which have been esterified with alcohols of paraffins having 12 or less carbon atoms in their chains. Each of the preferred inks is disclosed as having a melting point "which does not exceed about 51°C and a freezing point which is not below 30°C, to ensure that the ink will be in a liquid phase at the operating temperature at the exemplary reservoir, namely, about 56° ± 3°C, and that it "will be solid at generally encountered room temperatures to minimize its flow from the carrier. Berry et al discloses that such di-esters "provide excellent vehicles for pigments and dyes for producing high quality electrostatic printing", and further discloses a number of examples using methyl violet toner, C.I. solvent yellow, C.I. solvent black. The methyl violet toner of the examples comprises about 40% methyl violet tanate in a transparent yellow mineral oil carrier.

U.S. Patent No. 3,715,219 (Kurz et al) discloses a similar electrostatic printing process using an ink composition comprising about 3% of a dye such as C.I. solvent black or C.I. solvent yellow. The remainder of the Kurz et al ink is a vehicle comprised of at least one alcohol of the paraffin series which has the general formulas $CH_3(CH_2)_nCH_2OH$, in which n is an integer between 12 and 26. According to Kurz, the preferred hot melt type inks have melting points which do not exceed about 61°C and freezing points which are not below about 30°C. During the process, ink in a fluid phase is supplied at a constant flow rate from a source represented by a supply tube to a reservoir which terminates at a nozzle with a capillary bore. The chamber of the exemplary apparatus is maintained at a temperature in the range of about 62°C and 82°C during the disclosed process. Viscosity of the disclosed inks is said to be within a range having an upper limit of 50 centipoises (0.050 Pa.S) at operating temperatures, the exemplary inks in the Kurz et al references having viscosities of between 4.0-5.9 (0.0040-0.0059 Pa.S) at 80°C.

More recently, impulse ink jet printing processes using hot melt inks have been disclosed. Impulse ink jet printing differs from electrostatic printing in that individual droplets are discharged from a printing head in response to relatively low pressures which are typically achieved using piezo-electric head elements. Unlike electrostatic printing processes, such drop on demand processes produce much larger droplets which decelerate, not accelerate as they move toward the carrier.

One recent hot melt impulse ink jet ink is disclosed in U.S. Patent No. 4,390,369 (Merritt et al), entitled "Natural Wax-Containing Ink Jet Inks". This patent discloses the use of a number of natural waxes, such as Japan wax, candelilla wax, carnauba wax, etc. These waxes may be used at percentages of from 0.5 to 97.0% by weight either as the basic fluid vehicle of the ink or as an additive to other fluidic vehicles such as fatty acids, more particularly oleic or oleic acid with benzyl ether. Merritt et al disclose a number of such inks having viscosities of 6.7 to 15.7 cp (0.0067-0.0157 Pas) at 165°F (about 74°C). Merritt et al disclose that a "coloring agent or a dye such as an oil or solvent soluble dye is usually added to the composition for visibility". The disclosed colorants include HD Victoria Blue, Calco nigrosine base, Acetosol Yellow, RLSN, and oil black BN.

A number of hot melt impulse ink jet inks other than the present ink have been developed at the present assignee's facility which are solid or semi-solid at ambient temperature. One preferred other ink is comprising stearic acid in an approximate weight range of 50-99%. Commercially available stearic acids are produced from saponified and distilled animal fats usually being composed of 60% liquid and 40% solid acid, the bulk of the liquid acids being separated from the solid acids by hydraulic pressing to produce for example, single pressed, double-pressed, triple-pressed stearic acids, etc. According to the Handbook of Chemistry and Physics (49th Edition), chemically pure stearic acid is octadecanoic acid $(CH_3(CH_2)_{16}CO_2H)$ (melting point 70.1°C). In addition to stearic acid, additives such as oleic acids, Typophor black, nigrosine base, benzyl ether, compounded or chemically modified waxes (including natural or other synthetic substances), a coloring agent or dye, such as oil or solvent soluble dye, etc. may be used to formulate hot melt inks.

Also, hot melt impulse ink jet inks have been developed by the present assignee comprising acid or alcohol vehicles in the $C_{20}$-$C_{24}$; range, significant proportions of a relatively high melting point ketone, such as stearone; a solid plasticizer, such as an acrylic resin; and a coloring agent, such as a dye. Alternatively, the vehicle may comprise waxes, such as candelilla wax and/or other specified waxes which melt above 65°C.

Numerous prior art references disclose a wide variety of colorants for use in other (non-impulse) printing or writing applications. For example, U.S. Patent No. 4,238,807 (Bovio et al) discloses a non-impact printing device which selectively emits solid ink particles from a rod of solid ink which is pulsed with high voltages to cause ink particles to be eroded from the rod and ejected through a nozzle on the paper. The rod of said ink is disclosed as consisting of carbon black compressed with 5 to 20% of stearic acid as a binder. In U.S. Patent No. 4,273,847 (Lennon et al) inks are disclosed for use in pulsed electrical printing. According to this process, ink particles, such as carbon particles are charged by conduction of current from other particles closer to a supporting sheet, detached by the electric field and then caused to transfer to the receiving paper by the force induced solely by the electrical field.

Other inks containing pigment, such as carbon black are known for other purposes. U.S. Patents 3,421,910 (Gilson et al) and 3,330,673 (Voet et al) relate to a stencil paste and news printing inks, respectively, which use a dispersion of carbon black in mineral oil. U.S. Patents 4,337,183 (Santiago), 4,248,746 (Greiner) and 3,353,974 (Trimble) each disclose ink for purposes other than jet printers which use a carbon pigment in a vehicle. Patents including disclosures of glycerol, ethylene glycol, diethylene glycol and the like, with colorant materials such as pigments or dyes (most of which inks are water based) are disclosed in U.S. patents 3,421,910 (Gilson); 3,846,141 (Ostergren et al); 4,396,429 (Matsumoto et al); 4,395,287 (Kobayashi et al); 4,409,040 (Tobayashi et al); 4,421,559 (Owatari) and 4,176,361 (Kawada et al). U.S. Patent 4,443,820 discloses an ink which is solid at room temperature and liquid at an elevated temperature which contains more than ten percent of a dye dispersed in a hydrocarbon of the thermally dissoluble type. The ink is deposited on a (hectographic) master by discharging from a jet generating unit. The deposited ink is cooled hence forming an image configuration of solidified ink suitable for use in hectographic printing of a number of reproductions of an original image. The ink in its liquid form has a viscosity of 3 to 20 c.p. (0.003 to 0.020 Pa.S).

Notwithstanding the above-mentioned disclosures, a need exists to provide improved impulse ink jet inks which are capable of producing copy which approaches or exceeds the copy of standard impact-type printing, such as that which may be produced from a standard office typewriter or daisy-wheel printer. Such an ink should be readily jettable, easily stored and shipped for extended periods of time without separation or degradation, yet be capable of providing a sharp, dark, well defined copy when placed into use.

According to a first aspect or the present invention. there is provided a hot melt solid ink for supply to an ink jet apparatus which heats the solid ink to an elevated temperature above the melting point of the solid ink and supplies it as liquid ink to an impulse ink jet of a small nozzle diameter, comprising

a high molecular weight vehicle comprising a wax having a melting point above 65°C, or a $C_{18}$-$C_{24}$ fatty acid or alcohol the ink having viscosity of no more than 0.015 Pa.s (15 cp) at the elevated temperature;

solid pigment as a recording means, of a particle size of less than 25 microns; and

a non-evaporative carrier in which the solid pigment is suspended, the carrier being dispersed through the vehicle and compatible with the vehicle to enable the carrier and pigment to remain dispersed within the vehicle for long periods even at the elevated temperature.

The carrier may be an oil carrier. Preferably, the carrier is mineral oil. Preferably, the solid pigment is colloidal graphite. Unlike lower molecular weight vehicles, such as oleic acid vehicles, the graphite pigment may not settle out or separate even after extended times in the liquid state.

The solid pigment may be 0.1 - 5 % by weight of the ink.

The vehicle may be candelilla wax. The vehicle may be stearic acid and/or behenic acid. The ink may include a ketone having a melting point between 65 - 120°C. Preferably, the ketone is stearone.

Accordingly, a non-evaporative ink system is provided for ink jet printing which is light fast, exhibits excellent archival properties, little or no corrosion, good edge definition, good thermal stability, and good dot size. The subject inks exhibit little or no lateral spread when the drop hits the paper, provides potential for laminatible prints, and offers the possibility of providing bright colors, true process color printing and OCR readable copy.

A preferred ink of the present invention utilizes a pre-dispersed suspension of colloidal graphite having particle sizes of less than one micron, which are easily jetted through a 50 to 75 micron ink jet nozzle. Although the graphite particles would tend to settle out of inks having liquid vehicles, the high molecular weight, compatible nature of the disclosed inks prevents such separation even during extended operation at jetting temperatures.

According to a second aspect of the present invention, there is provided a method of operating an ink jet apparatus comprising the steps of:

(a) heating a hot melt solid ink according to the first aspect to an elevated temperature to form a liquid ink:

(b) during a printing period

(i) discharging droplets of the liquid ink via an impulse ink jet towards a nearby print substrate, and

(ii) allowing the ink to solidify by cooling upon impact with the substrate to form print thereon: and

(c) during a standby period maintaining the liquid ink at the elevated temperature in readiness for the next printing period without the pigment settling out or separating from the vehicle.

Preferably, the elevated temperature is above 65°C. The elevated temperature may be above 80°C.

Preferably, the viscosity is no more than 14 cp. (0.014 Pa.s)

## DESCRIPTION OF THE PREFERRED EMBODIMENT

The present invention provides a novel hot melt ink jet ink composition for use in an impulse ink jet apparatus comprising a solid pigment dispersed in a vehicle comprising a $C_{18}$-$C_{24}$ acid or alcohol, or even more preferably, wax having a melting point above 65°C. As used herein, the term "pigment" refers to visible materials which are not soluble, but are suspended or dispersed as fine particles in the subject ink. The preferred solid pigment is a colloidal graphite having a particle size less than 25, preferably less than 10, more preferably less than one micron, which is carried in a non-evaporative oil carrier, such as mineral oil. Graphite is particularly preferred as a pigment when black is the desired color, however, other known pigments such as carbon black and barium lithol, are suitable for use in the present invention provided they meet aforementioned particle size requirements and do not unacceptably agglomerate or settle from the subject ink.

As mentioned above, one preferred vehicle is a $C_{18}$-$C_{24}$ fatty acid vehicle, or alcohol, acids being preferred over alcohols. Stearic acid or behenic acids are two such suitable acids, behenic presently being preferred over stearic. The preferred embodiment vehicle is a wax, particularly candelilla wax, having a melting point above 65°C. Other waxes believed suitable include bamboo leaf, certain bees waxes, caranda, carnauba, hydrogenated castor oil, Chinese insect, cotton, cranberry, certain Douglas-fir bark, asparto, certain flax, Indian corn, Madagascar, most microcrystalline waxes, montan, ouricury, ozocerite, palm, peat wax, rice bran, shellac wax, sisal hemp, sorghum grain, Spanish moss, refined sugar cane waxes and mixtures thereof, each of which waxes has a melting temperature above about 65°C. Mixtures of such waxes found suitable for jetting include a 50-50 mixture of candelilla and carnauba (97% wax, 3% dag).

In the preferred embodiment the solid pigment should comprise 0.1-10 wt%, preferably 1-5 wt%, more preferably 2-3 wt% of the ink. The herein disclosed vehicle of the subject ink should normally comprise 50-99.1, preferably 90-99 wt%, more preferably 95-98 wt% of the subject ink. The subject ink jet ink should normally have a maximum viscosity of about 15 centipoises (0.015 Pas) preferably less than about 14 centipoises (0.014 Pas), when discharged from an impulse ink jet apparatus at elevated temperatures, preferably above about 80°C.

In addition to the above-described components, the ink of the present invention may comprise additional additives, including ketones preferably of m.pt in the range 65 to 120°C, such as stearone or laurone, which ketones should preferably not exceed 50 wt % of said ink. The disclosed inks may optionally also contain up to 4 wt % of a plasticizer, such as an acrylic resin plasticizer. For a further description of such additives reference is made to co-pending European Patent Application 85.305977.2, which is incorporated by reference herein.

In addition to providing a novel ink, the present invention provides a novel method of hot melt impulse ink jet printing comprising the steps of (a) providing a hot melt impulse ink jet ink comprising at least a solid pigment dispersed in a vehicle comprising $C_{18}$-$C_{24}$ fatty acids or alcohols; or wax(es) having melting point(s) above 65°C; (b) heating said impulse ink jet ink to a temperature above 65°C, preferably above 80°C to obtain a composition having a viscosity below about 15 centipoises (0.015 Pas), and (c) impulse jetting said ink jet composition at said elevated temperature against a substrate whereby said composition solidifies to form hot melt print.

The use of solid pigment, such as colloidal dispersed graphite overcomes many of the difficulties which are encountered in using dyes in such inks. At high temperatures, such as the temperatures preferred for jetting hot melt inks, dyes are not as stable as pigments, not as strong in color, nor as permanent. The chief advantage of dyes are that they are soluble in most ink formulations and will not settle or separate during the storage shipment or use of such inks.

Applicants have recognized that when high molecular weight, relatively high melting point vehi-

cles, such as $C_{18}$-$C_{24}$ fatty acids or waxes are utilized, colloidal graphite will be frozen in suspension during non-operating periods. Furthermore, it has been found that, even when heated, high melting point materials, such as candelilla wax, maintain the suspension of such graphite particles for much longer times than corresponding liquid inks, such as oleic acid based inks. Furthermore, thermal stability and other advantages of such pigments would be highly advantageous, even if agitation were to be used to maintain their colloidal suspension over extended periods of time.

Example 1 (below) describes the use of an oleic acid based ink for comparison with inks of the present invention.

EXAMPLE 1

Oil Dag (dispersed Acheson graphite) in mineral oil was diluted to approximately 2% solids (graphite) with oleic acid, with a resultant viscosity of about 60 cps (0.060 Pas) at 20°C and 13 cps (0.013 Pas) at 57°C. This ink comprised 95 wt% oleic acid, 3 wt% mineral oil and 2 wt% graphite. This solution was jetted using a standard liquid impulse ink jet system, available under the tradename "Archer Imaging Subsystem". Character printing was conducted yielding high quality, highly defined dots and characters. The system was operated for at least 4 hours, allowed to stand overnight, and refired acceptably the next day. No adverse effect of particulate matter influencing the performance was noticed, however the subject pigment had tended to settle, and, over two days the subject ink gradually lost its color and became colorless. This ink would be unsuitable for use in impulse ink jet printing because, during storage, shipment and/or normal use the dispersed graphite would settle to the point where its resuspension for jetting would not be practical.

The present invention may further be understood from the following examples:

EXAMPLE 2

An impulse ink jet ink was prepared comprising 95 wt% candelilla wax and 5 wt% oil dag, again to provide an ink having about 2 wt% colloidal graphite, and 3 wt% mineral oil. The resulting ink was found to have excellent jettability at an operating reservoir temperature of between 90-120°C. Its viscosity at 110°C was about 10 cps (0.010 Pas). The subject ink produced very good print quality, both initially, and after 199 hours of standing at operating temperature in the liquid state. It is believed that these results stem in part from the excellent compatibility between the subject vehicle and the colloidal graphite in the subject composition, and also possibly the effects of convective currents within the subject ink at the 90°C + operating temperatures of the subject test.

EXAMPLE 3

An impulse ink jet ink was prepared comprising 95 wt% stearic acid, 2 wt% colloidal graphite, and 3 wt% mineral oil. The resulting ink had a viscosity at 80°C of 10 cps (0.010 Pas). Stearic acid represents one of the lower molecular weight acids suitable for use as the vehicle for the herein disclosed inks, and is presently not as preferred as such higher molecular weight acids as behenic. Nonetheless, this stearic acid ink was found to exhibit suitable jettability and good print quality initially, and over a period of 16 hours (overnight) while left standing at operating temperatures of 90°C. While such a standing time is presently not believed to be acceptable for most commercial applications, the use of such a pigmented hot-melt ink impulse ink jet ink on a commercial basis may nonetheless be facilitated if incorporated with other known techniques for improving the stability of dispersions, including for example, the use of emulsifiers. It is further anticipated that the use of proportions of stearic acid with high melting point ketones, such as stearone or laurone, or with additions the aforementioned waxes or higher molecular weight fatty acids or alcohols might further improve the long term stability of such inks.

In view of the above, it is anticipated that materials such as the aforementioned fatty acids or alcohols of relatively high molecular weight and the aforementioned waxes which melt above 65°C are particularly suitable vehicles for use in formulating inks of the present invention.

**Claims**

1. A hot melt solid ink for supply to an ink jet apparatus which heats the solid ink to an elevated temperature above the melting point of the solid ink and supplies it as liquid ink to an impulse ink jet of a small nozzle diameter, comprising:

a high molecular weight vehicle comprising a wax having a melting point above 65° C, or a $C_{18}$ -$C_{24}$ fatty acid or alcohol, the ink having a viscosity of no more than 0.015 Pa.s (15 cp) at the elevated temperature;

solid pigment as a recording means, of a particle size of less than 25 microns and

a non-evaporative carrier in which the solid pigment is suspended, the carrier being dispersed through the vehicle and compatible with the vehicle to enable the carrier and pigment to remain dispersed within the vehicle for long periods even at the elevated temperature.

2. An ink according to Claim 1, wherein the carrier is an oil carrier.

3. An ink according to claim 1, wherein the carrier is mineral oil.

4. An ink according to any of the preceding claims, wherein the solid pigment is colloidal graphite.

5. An ink according to any of the preceding claims, wherein the solid pigment is 0.1 - 5% by weight of the ink.

6. An ink according to any of the preceding claims, wherein the vehicle is candelilla wax.

7. An ink according to any of claims 1 to 5, wherein the vehicle is stearic acid and/or behenic acid.

8. An ink according to any of the preceding claims, wherein the ink includes a ketone having a melting point between 65 - 120°C.

9. An ink according to claim 8, wherein the ketone is stearone.

10. An ink according to claim 1, wherein the solid pigment is barium lithol.

11. An ink according to claim 1, wherein the solid pigment is carbon black.

12. An ink according to claim 1, wherein the solid pigment comprises 0.1-10 by weight percent of the ink.

13. An ink according to claim 1, wherein the solid pigment comprises 1-5 by weight percent of the ink.

14. An ink according to claim 1, wherein the solid pigment comprises 2-3 by weight percent of the ink.

15. An ink according to claim 1, wherein the solid pigment has a particle size of less than 10 microns.

16. An ink according to claim 1, wherein the solid pigment has a particle size of less than 1 micron.

17. An ink according to claim 1, wherein the vehicle comprises 50-99.1 by weight percent of the ink.

18. An ink according to claim 1, wherein the vehicle comprises 90-99 by weight percent of the ink.

19. An ink according to claim 1, wherein the vehicle comprises 95-98 by weight percent of the ink.

20. An ink according to claim 1, wherein the ink further includes up to 4 weight per cent of a plasticizer.

21. An ink according to claim 8, wherein the ketone is laurone.

22. An ink according to claim 8, wherein the ketone is less than 50 weight percent of the ink.

23. An ink according to claim 1, wherein the maximum viscosity of the ink is 0.014 Pa.s (14 centipoise).

24. A method of operating an ink jet apparatus comprising the steps of:
    (a) heating a hot melt sold ink as defined in any preceding claim to an elevated temperature to form a liquid ink;
    (b) during a printing period
        (i) discharging droplets of the liquid ink via an impulse ink jet towards a nearby print substrate, and
        (ii) allowing the ink to solidify by cooling upon impact with the substrate to form print thereon; and
    (c) during a standby period maintaining the liquid ink at the elevated temperature in readiness for the next printing period without the pigment settling out or separating from the vehicle.

25. A method according to claim 24, wherein the elevated temperature is above 65°C.

26. A method according to claim 24, wherein the elevated temperature is above 80°C.

27. A method according to claim 24, wherein the viscosity is no more than 0.014 Pa.s (14 cp).

**Revendications**

1. Encre solide, fusible à chaud , pour alimenter un appareil à jet d'encre ,qui chauffe l'encre solide jusqu'à une température élevée, supérieure au point de fusion de l'encre solide et la fournit,sous forme d'encre liquide à un jet d'encre pulsé d'un ajutage de faible diamètre , comprenant :

un véhicule à poids moléculaire élevé, comprenant une cire ayant un point de fusion supérieur à 65 °C, ou un acide gras ou un alcool en $C_{18}$ - $C_{24}$ , l'encre ayant une viscosité non supérieure à o,015 Pa.s (15 cP) à la température élevée ;

du pigment solide comme moyen d'enregistrement ,ayant une taille particulaire inférieure à 25 micromètres; et

un support qui ne s'évapore pas et dans lequel le pigment solide est en suspension , le support étant dispersé dans le véhicule et étant compatible avec le véhicule pour permettre au support et au pigment de demeurer en dispersion dans le véhicule pendant de longues périodes de temps même à la température élevée .

2. Encre selon la revendication 1 , dans laquelle le support est un support huileux .

3. Encre selon la revendication 1 , dans laquelle le support est une huile minérale .

4. Encre selon l'une quelconque des revendications précédentes , dans laquelle le pigment solide est du graphite colloidal .

5. Encre selon l'une quelconque des revendications précédentes , dans laquelle la proportion du pigment solide est de 0,1 à 5 % en poids de l'encre .

6. Encre selon l'une quelconque des revendications précédentes , dans laquelle le véhicule est de la cire de Candelilla .

7. Encre selon l'une quelconque des revendications 1 à 5 , dans laquelle le véhicule est de l'acide stéarique et/ou de l'acide béhénique .

8. Encre selon l'une quelconque des revendications précédentes , dans laquelle l'encre inclut une cétone dont le point de fusion se situe entre 65 et 120 °C.

9. Encre selon la revendication 8 , dans laquelle la cétone est la stéarone .

10. Encre selon la revendication 1 , dans laquelle le pigment solide est du lithol de baryum .

11. Encre selon la revendication 1 , dans laquelle le pigment solide est du noir de carbone .

12. Encre selon la revendication 1 , dans laquelle le pigment solide représente 0,1 à 10 % en poids de l'encre .

13. Encre selon la revendication 1 , dans laquelle le pigment solide représente 1 à 5 % du poids de l'encre .

14. Encre selon la revendication 1 , dans laquelle le pigment solide représente 2 à 3 % du poids de l'encre .

15. Encre selon la revendication 1 , dans laquelle le pigment solide a une taille particulaire inférieure à 10 micromètres .

16. Encre selon la revendication 1 , dans laquelle le pigment solide a une taille particulaire inférieure à 1 micromètre .

17. Encre selon la revendication 1 , dans laquelle le véhicule représente de 50 à 99, 1 % en poids de l'encre .

18. Encre selon la revendication 1 , dans laquelle le véhicule représente de 90 à 99 % en poids de l'encre .

19. Encre selon la revendication 1 , dans laquelle le véhicule représente 95 à 98 % du poids de l'encre .

20. Encre selon la revendication 1 , dans laquelle l'encre comprend en outre jusqu'a 4 % en poids d'un plastifiant .

21. Encre selon la revendication 8 , dans laquelle la cétone est de la laurone .

22. Encre selon la revendication 8 , dans laquelle la cétone forme moins de 50 % du poids de l'encre .

23. Encre selon la revendication 1 , dans laquelle la viscosité maximale de l'encre est de 0,014 Pa.s ( 14 centipoises ) .

24. Procédé pour faire fonctionner un appareil à jet d'encre, comprenant les étapes consistant à :

(a) chauffer une encre solide fusible à chaud, telle que définie dans l'une quelconque des revendications précédentes , jusqu'à une température élevée pour former une encre liquide ;

(b) pendant la période d'impression

(i) décharger des gouttelettes de l'encre liquide, par l'intermédiaire d'un jet d'encre pulsé, sur un substrat voisin à imprimer ;

(ii) laisser l'encre se solidifier par refroidissement lors de son contact avec le substrat, pour y former une impression ;

(c) pendant une période d'attente , maintenir l'encre liquide à la température élevée , disponible pour la période d'impression suivante , sans que le pigment se dépose ou se sépare du véhicule .

25. Procédé selon la revendication 24 , dans lequel la température élevée est supérieure à 65 °C .

26. Procédé selon la revendication 24 , dans lequel la températuture élevée est supérieure à 80 °C.

27. Procédé selon la revendication 24 , dans lequel la viscosité n'est pas supérieure à 0,014 Pa.s ( 14 cP) .

**Patentansprüche**

1. Feste Heißschmelztinte zur Versorgung eines Tintenstrahlgeräts, das die feste Tinte auf eine erhöhte Temperatur oberhalb des Schmelzpunkts der festen Tinte erwärmt und als flüssige Tinte einer Impulstintenstrahldüse mit kleinem Durchmesser zuführt,
die ein Vehikel mit hohem Molekulargewicht, das ein Paraffin mit einem Schmelzpunkt oberhalb von 65°C, eine $C_{18}$-$C_{24}$-Fettsäure oder einen $C_{18}$-$C_{24}$-Fettalkohol umfaßt, wobei die Tinte eine Viskosität von nicht mehr als 0,015 Pa·s (15 cp) bei der erhöhten Temperatur aufweist,
festes Pigment als Aufzeichnungsmittel mit einer Teilchengröße von weniger als 25 $\mu$m und einen nicht-flüchtigen Träger umfaßt, in dem das feste Pigment suspendiert ist, wobei der Träger im Vehikel dispergiert und mit dem Vehikel kompatibel ist, damit der Träger und das Pigment in dem Vehikel sogar bei der erhöhten Temperatur über lange Zeiträume dispergiert bleiben.

2. Tinte nach Anspruch 1, bei der der Träger ein Ölträger ist.

3. Tinte nach Anspruch 1, bei der der Träger Mineralöl ist.

4. Tinte nach einem der vorhergehenden Ansprüche, bei der das feste Pigment kolloidaler Graphit ist.

5. Tinte nach einem der vorhergehenden Ansprüche, bei der das feste Pigment 0,1 bis 5 Gew.% der Tinte ausmacht.

6. Tinte nach einem der vorhergehenden Ansprüche, bei der das Vehikel Candelillawachs ist.

7. Tinte nach einem der Ansprüche 1 bis 5, bei der das Vehikel Stearinsäure und/oder Behensäure ist.

8. Tinte nach einem der vorhergehenden Ansprüche, bei der die Tinte ein Keton mit einem Schmelzpunkt zwischen 65 und 120°C enthält.

9. Tinte nach Anspruch 8, bei der das Keton Stearon ist.

10. Tinte nach Anspruch 1, bei der das feste Pigment Bariumlithol ist.

11. Tinte nach Anspruch 1, bei der das feste Pigment Ruß ist.

12. Tinte nach Anspruch 1, bei der das feste Pigment 0,1 bis 10 Gew.% der Tinte ausmacht.

13. Tinte nach Anspruch 1, bei der das feste Pigment 1 bis 5 Gew.% der Tinte ausmacht.

14. Tinte nach Anspruch 1, bei der das feste Pigment 2 bis 3 Gew.% der Tinte ausmacht.

15. Tinte nach Anspruch 1, bei der das feste Pigment eine Teilchengröße von weniger als 10 $\mu$m aufweist.

16. Tinte nach Anspruch 1, bei der das feste Pigment eine Teilchengröße von weniger als 1 $\mu$m aufweist.

17. Tinte nach Anspruch 1, bei der das Vehikel 50 bis 99,1 Gew.% der Tinte ausmacht.

18. Tinte nach Anspruch 1, bei der das Vehikel 90 bis 99 Gew.% der Tinte ausmacht.

19. Tinte nach Anspruch 1, bei der das Vehikel 95 bis 98 Gew.% der Tinte ausmacht.

20. Tinte nach Anspruch 1, die außerdem bis zu 4 Gew.% eines Weichmachers enthält.

21. Tinte nach Anspruch 8, bei der das Keton Lauron ist.

22. Tinte nach Anspruch 8, bei der das Keton weniger als 50 Gew.% der Tinte ausmacht.

23. Tinte nach Anspruch 1, bei der die maximale Viskosität 0,014 Pa•s (14 centipoise) beträgt.

24. Verfahren zum Betreiben eines Tintenstrahlgeräts, bei dem:

    (a) eine feste Heißschmelztinte gemäß einem der vorhergehenden Ansprüche auf eine erhöhte Temperatur erwärmt wird, um eine flüssige Tinte zu bilden,

    (b) während eines Druckzeitraums

        (i) Tröpfchen der flüssigen Tinte über eine Impulstintenstrahldüse in Richtung eines in der Nähe angeordneten Drucksubstrats abgegeben werden und

        (ii) die Tinte sich durch Abkühlung beim Aufprall auf das Substrat verfestigen kann, um darauf einen Druck zu bilden, und

    (c) während eines Bereitschaftszeitraums die flüssige Tinte auf der erhöhten Temperatur für den nächsten Druckzeitraum bereit gehalten wird, ohne daß sich Pigment absetzt oder von dem Vehikel trennt.

25. Verfahren nach Anspruch 24, bei dem die erhöhte Temperatur oberhalb von 65°C liegt.

26. Verfahren nach Anspruch 24, bei dem die erhöhte Temperatur oberhalb von 80°C liegt.

27. Verfahren nach Anspruch 24, bei dem die Viskosität nicht größer als 0,014 Pa•s (14 cp) ist.